# EUROPÄISCHE PATENTSCHRIFT

(11) **EP 3 862 249 B1**
(45) Veröffentlichungstag und Bekanntmachung des Hinweises auf die Patenterteilung: **10.01.2024**
(21) Anmeldenummer: 20205624.8
(22) Anmeldetag: 04.11.2020
(51) Int. Cl.: B62D 5/093, B62D 1/22

(54) **LENKSYSTEM FÜR EIN LANDWIRTSCHAFTLICHES FAHRZEUG**
STEERING SYSTEM FOR AN AGRICULTURAL VEHICLE
SYSTÈME DE DIRECTION POUR UN VÉHICULE AGRICOLE

(30) Priorität: 06.02.2020 DE 102020102999
(43) Veröffentlichungstag der Anmeldung: 11.08.2021
(73) Patentinhaber: CLAAS Selbstfahrende Erntemaschinen GmbH, 33428 Harsewinkel (DE)
(72) Erfinder: Jeppe, Eckehardt, 34289 Zierenberg (DE)
(74) Vertreter: CLAAS Gruppe

(56) Entgegenhaltungen:
- EP-A2- 1 354 786
- EP-A2- 2 639 138
- DE-A1- 1 947 205
- US-A1- 2017 021 766

## Beschreibung

Die vorliegende Erfindung betrifft ein Lenksystem für ein landwirtschaftliches Fahrzeug gemäß dem Oberbegriff des Anspruches 1 sowie ein landwirtschaftliches Fahrzeug.

Landwirtschaftliche Fahrzeuge, wie etwa selbstfahrende Erntemaschinen oder Traktoren, weisen regelmäßig ein hydrostatisches Lenksystem auf. Ein konventionelles hydrostatisches Lenksystem basiert auf dem Prinzip, dass ein Lenksignalgeber, also etwa ein Lenkrad, mit einem hydraulischen Lenkventil mechanisch verbunden wird, welches je nach Betätigungsgrad ein bestimmtes Volumen an von einer Hydraulikpumpe bereitgestelltem Öl einem Lenkzylinder zuführt und diesen damit druckbeaufschlagt. Entsprechend diesem Volumen an Öl und in Abhängigkeit davon, in welche Richtung der Lenkzylinder druckbeaufschlagt wird, verändert der Lenkkolben des Lenkzylinders seine Auslenkung, wodurch die Achsschenkellenkung betätigt wird und sich der Radeinschlagwinkel des landwirtschaftlichen Fahrzeugs einstellt. Solche hydraulischen Lenkventile, welche mechanisch durch den Lenksignalgeber betätigt werden und daher eine feste Lenkübersetzung - hier und nachfolgend als Zusammenhang zwischen dem Betätigungsgrad des Lenksignalgebers und der Verstellung der Lenkzylinder definiert - aufweisen, werden insbesondere als Orbitrole bezeichnet.

Zusätzlich zu einem solchen Orbitrol ist ein elektrohydraulisches Ventil vorgesehen, welches von einem Steuermodul elektrisch ansteuerbar ist und entweder unabhängig zu dem Orbitrol oder gleichzeitig mit dem Orbitrol in gleicher Weise die Lenkzylinder mit Öl druckbeaufschlagen kann, mit der Folge der entsprechenden Änderung des Radeinschlagwinkels. Eine unabhängige solche Ansteuerung durch das Steuermodul kann zur Verwirklichung einer Autopilotfunktion verwendet werden, sodass also der Radeinschlagwinkel gemäß einer Sollfahrspur nachgeregelt wird, ohne dass das Lenkrad oder das Orbitrol betätigt werden. Mittels einer gleichzeitigen Druckbeaufschlagung des Lenkzylinders durch das Orbitrol und durch das elektrohydraulische Ventil kann hingegen einerseits die Lenkübersetzung erhöht werden und andererseits auch die Zeit verkürzt werden, welche zum Erreichen eines bestimmten Radeinschlagwinkels durch die Räder des landwirtschaftlichen Fahrzeugs benötigt wird. Dies liegt daran, dass dann sowohl das Orbitrol als auch das elektrohydraulische Ventil den Lenkzylinder, ggf. mit jeweils eigener Pumpe, druckbeaufschlagen. Eine solche Unterstützung des Lenkvorgangs wird auch als "Fast Steering" bezeichnet.

Aus der DE 10 2014 118 229 A1 ist ein Lenksystem der eingangs genannte Art bekannt. Des Weiteren offenbart die EP1354786 A2 den Oberbegriff des unabhängigen Anspruchs.

Ein Nachteil des Orbitrols als Lenkunterstützung besteht darin, dass es aufgrund von hydraulischen Undichtigkeiten zu einem Wandern einer Nullstellung des Lenksignalgebers relativ zu einer sich bei Geradeauslauf des Fahrzeugs einstellenden Nullstellung des Radeinschlagwinkels kommt. Der Lenksignalgeber, insbesondere ein Lenkrad, weist im Verlauf des Betriebs des landwirtschaftlichen Fahrzeugs eine sich verändernde Nullstellung auf. Eine solche Veränderung der Nullstellung des Lenksignalgebers ist durch eine Bedienperson im Allgemeinen nicht wahrnehmbar, es sei denn, dass der Lenksignalgeber aufgrund seiner geometrischen Gestaltung eine solche Abweichung insbesondere optisch oder haptisch wahrnehmen lässt.

Somit liegt der Erfindung die Aufgabe zugrunde, ein Lenksystem für ein landwirtschaftliches Fahrzeug bereitzustellen, welches sich durch eine gleichbleibende Nullstellung des Lenksignalgebers auszeichnet.

Diese Aufgabe wird erfindungsgemäß durch ein Lenksystem mit den Merkmalen des unabhängigen Anspruches 1 gelöst.

Vorteilhafte Weiterbildungen sind Gegenstand der Unteransprüche.

Gemäß dem Anspruch 1 wird ein Lenksystem für ein landwirtschaftliches Fahrzeug mit mindestens einem Lenkzylinder zur Änderung eines Radeinschlagwinkels des landwirtschaftlichen Fahrzeugs vorgeschlagen, mit einem hydraulischen Hauptlenkventil zur Druckbeaufschlagung des mindestens einen Lenkzylinders, mit einem Lenksignalgeber zur Betätigung des Hauptlenkventils sowie mit einer Steuereinheit zur Anpassung einer Einstellcharakteristik zwischen dem Lenksignalgeber und dem mindestens einen Lenkzylinder, wobei die Steuereinheit dazu eingerichtet ist, basierend auf einer sich bei Geradeauslauf einstellenden Nullstellung des Radeinschlagwinkels eine Nachführung einer Nullstellung des Lenksignalgebers durch eine Ansteuerung des Hauptlenkventils vorzunehmen. Das Nachführen der Nullstellung des Lenksignalgebers durch Öffnen des Hauptlenkventils bewirkt, dass dem Wandern der Nullstellung des Lenksignalgebers aktiv begegnet wird. Dabei erfolgt der Vorgang des Nachführens durch das Öffnen des Hauptlenkventils so langsam, dass eine Bedienperson des Fahrzeugs diesen Vorgang nicht wahrnimmt. Zudem werden somit auch die Anforderungen an die Betriebssicherheit des Lenksystems respektive des Fahrzeugs erfüllt. Die Integration der Funktion "Fast Steering", mit der an dem landwirtschaftlichen Fahrzeug die Übersetzung von Lenkraddrehung zu Radwinkel in Abhängigkeit vom Einsatzfall beeinflusst werden kann, ermöglicht es somit zusätzlich, der "Undichtigkeit" eines Orbitrols entgegenwirken, indem hiermit sehr langsam die Nullstellung des Lenksignalgebers der sich bei Geradeauslauf einstellenden Nullstellung des Radeinschlagwinkels nachgeführt wird.

Dabei sind zur Bestimmung des Radeinschlagwinkels ein Radwinkelsensor und zur Bestimmung einer Lenkstellung des Lenksignalgebers ein Lenkstellungssensor vorgesehen.

Der Radwinkelsensor kann zur mittelbaren oder unmittelbaren Bestimmung des Radeinschlagwinkels eingerichtet sein. Der Lenkstellungssensor kann zur mittelbaren oder unmittelbaren Bestimmung der Lenkstellung des Lenksignalgebers eingerichtet sein. Unmittelbar Bestimmung heißt, dass der Radeinschlagwinkel bzw. die Lenkstellung durch den Radwinkelsensor bzw. den Lenkstellungssensor erfasst werden. Unter einer mittelbaren Bestimmung ist zu verstehen, dass der Radwinkelsensor bzw. der Lenkstellungssensor Signale von einer Aktorik, mit der ein Radeinschlagwinkel verändert sowie die Betätigung des Lenksignalgebers übertragen werden, erfassen, die von der Steuereinheit ausgewertet werden, um daraus den Radeinschlagwinkel bzw. die Lenkstellung abzuleiten.

Die Steuereinheit ist dazu eingerichtet, durch Auswertung der Signale von Radwinkelsensor und Lenkstellungssensor eine Nachführgeschwindigkeit zu bestimmen und in Abhängigkeit von der bestimmten Nachführgeschwindigkeit die Nachführung der Nullstellung des Lenksignalgebers durchzuführen. Die Nachführgeschwindigkeit kann durch eine, insbesondere pulsweitenmodulierte, Ansteuerung soweit reduziert werden, dass der Vorgang des Nachführens bei normalen Lenkvorgängen durch die Bedienperson nicht wahrgenommen wird.

Bevorzugt kann die Steuereinheit dazu eingerichtet sein, die Nachführung der Nullstellung des Lenksignalgebers zumindest bei einer Feldfahrt durchzuführen. Eine Beschränkung der Nachführung der Nullstellung auf Feldfahrten und damit gegenüber einer Straßenfahrt niedrigeren Fahrgeschwindigkeiten kann unter dem Aspekt einer erhöhten Betriebssicherheit vorteilhaft sein. Denkbar ist auch, dass als Hauptlenkventil ein Ventil mit einem sehr kleinen Öldurchsatz zum Einsatz kommt, mit welchem eine größere Nachführgeschwindigkeit bzw. ein schnellerer Lenkwinkeleingriff technisch gar nicht möglich ist.

Bei dem Hauptlenkventil kann es um ein elektrohydraulisches Ventil mit einer an sich veränderlichen Ventilübersetzung handeln. Es kann sich bei dem Hauptlenkventil um ein elektrohydraulisches Hauptlenkventil mit einer elektrisch einstellbaren Ventilübersetzung handeln. Im Gegensatz zu dem mechanischen Ventil kann bei einem elektrohydraulischen Hauptlenkventil die Ventilübersetzung elektrisch verändert werden. Diese Variante hat den Vorteil, dass eine Anpassung der Einstellcharakteristik rein durch eine elektrische Ansteuerung des Hauptlenkventils verwirklicht werden kann.

Gemäß einer bevorzugten Weiterbildung kann der Lenksignalgeber als ein Lenkrad ausgebildet sein, welches wenigstens einen Abschnitt aufweist, der mit Elementen zur Ansteuerung von Funktionen des Fahrzeugs ausgeführt ist. Durch die erfindungsgemäße Nachführung der Nullstellung des Lenkrades wird eine gleichbleibende Geradeausstellung des Lenkrades erreicht, wodurch bei einer Anordnung von Elementen zur Ansteuerung von Funktionen des Fahrzeugs auf dem Anschnitt des Lenkrades gewährleistet ist, dass diese sich in Geradeausstellung des Lenkrades stets in einer im Wesentlichen gleichen Position befinden. Dadurch ist eine sichere und reproduzierbare Betätigung der Elemente durch die Bedienperson gewährleistet.

Zudem kann das Lenkrad einen Lenkknauf aufweisen. Der Lenkknauf kann bezüglich des Lenkradkranzes drehbar sein und erlaubt ein einhändiges Lenken. Dadurch, dass sich in Geradeausstellung des Lenkrades stets in einer im Wesentlichen gleichen Position befindet, befindet sich auch der Lenkknauf im Wesentlichen in der gleichen Position, wodurch die Ergonomie verbessert wird.

Insbesondere kann der Abschnitt mit als Bedienelementen ausgeführten Elementen versehen sein. Die Bedienelemente können beispielsweise als Taster, Schalter, Kipptasten, Kippschalter, Schaltwippe oder Drehschalter ausgeführt sein. Ebenfalls denkbar ist eine Ausführung eines oder mehrerer Bedienelemente beispielsweise als Scrollrad oder ähnliches.

Gemäß einer bevorzugten Weiterbildung kann der Abschnitt mit einem als eine Anzeigeeinheit ausgeführten Element versehen sein. Die Anzeigeeinheit bzw. ein Anzeigeterminal kann hierzu im Wesentlichen im Mittenbereich des Lenkrades angeordnet sein. Die Anzeigeeinheit kann beispielsweise als eine berührungssensitive Anzeigeeinheit ausgeführt sein, die neben der Anzeigefunktion auch eine Bedien- und Einstellstellfunktionalität aufweist.

Ein weiterer Vorteil, der aus der Nachführung der Nullstellung des Lenksignalgebers respektive des Lenkrades resultiert, ist, dass der Abschnitt an dem Lenkrad mit einer Lenksäule durch eine Kabelverbindung unmittelbar verbunden sein kann. Die unmittelbar verbundene Kabelverbindung kann festverlegt sein. Da erfindungsgemäß ein Wandern oder Driften der Nullstellung des Lenksignalgebers und somit eine Relativbewegung zwischen dem Lenksignalgeber und der Lenksäule vermieden wird, kann es nicht zu einem Reißen der festverlegten Kabelverbindung durch eine Überdehnung kommen. Somit kann auf kostenintensive Bauteile wie unter anderem ein Schleifringübertrager verzichtet werden, welcher beim Stand der Technik zum Einsatz kommt, um das Wandern der Nullstellung des Lenksignalgebers zu ermöglichen.

Insbesondere können die Bedienelemente und/oder die Anzeigeeinheit der Ansteuerung von Komfortfunktionen des landwirtschaftlichen Fahrzeugs dienen. Komfortfunktionen können beispielsweise die Ansteuerung eines Medienwiedergabegerätes, einer Klima- und/oder Lüftungsvorrichtung oder die Lichtsteuerung des landwirtschaftlichen Fahrzeugs sein. Die zumindest teilweise Verlagerung der Bedienung von Komfortfunktionen des landwirtschaftlichen Fahrzeugs auf die Bedienelemente am Lenkrad hat den Vorteil, dass dadurch beispielsweise Doppelbelegungen von Betätigungselementen, d.h. die Belegung von Betätigungs-elementen mit zwei unterschiedlichen Funktionen, die an einer Armlehne eines Fahrersitzes in dem Fahrzeug angeordnet sind, entfallen können.

Des Weiteren können die Bedienelemente und/oder die Anzeigeeinheit der Ansteuerung von Betriebsfunktionen des landwirtschaftlichen Fahrzeugs dienen. Mittels der Anzeigeeinheit können auch Anzeige - und/oder Bedienfunktionen einer übergeordneten Steuerungsvorrichtung des landwirtschaftlichen Fahrzeugs zumindest in Teilen wiedergegeben werden. Da der Bildschirm einer solchen Steuerungsvorrichtung in der Regel seitlich des Fahrersitzes in einer Kabine des Fahrzeugs positioniert ist und sich damit - in Abhängigkeit von der Blickrichtung der Bedienperson - am äußeren Rand oder außerhalb des Gesichtsfeldes der Bedienperson befindet, bietet die Anzeigeeinheit am oder im Lenkrad eine ergonomischere Darstellungsmöglichkeit von Betriebsfunktionen. Es können hierdurch auch Betätigungselemente an der Armlehne freigegeben werden, die mit bestehenden oder neuen Betriebsfunktionen belegt werden können. Es lässt sich eine Gruppierung der Komfortfunktionen gegenüber der Vielzahl der Betriebsfunktionen erreichen, wodurch eine bessere Übersichtlichkeit geschaffen wird.

Gemäß einer bevorzugten Weiterbildung kann an einer im Bereich der Lenknabe befindlichen Fläche des Lenkrades oder am Lenkkranz eine Halterung anbringbar sein, welche der Aufnahme eines mobilen Datenverarbeitungsgerätes dient. Durch das Nachführen der Nullstellung des Lenkrades ist es möglich, zumindest während der Geradeausfahrt ein in der Halterung angeordnetes mobiles Datenverarbeitungsgerät wie beispielsweise ein Mobiltelefon oder Tablet ergonomisch bedienen zu können. Dabei können von dem mobilen Datenverarbeitungsgerät beispielsweise Anwendungen, sogenannte Apps, ausgeführt werden, welche neben einer Kommunikation mit anderen, räumlich entfernten, Personen auch dem Fernzugriff auf Betriebsfunktionen des landwirtschaftlichen Fahrzeugs, anderer Fahrzeuge oder anderer Betriebszweige dienen können.

Besonders vorteilhaft ist es, wenn in die Halterung eine Ladefunktionalität integriert ist, insbesondere in Form zumindest eines USB-Anschlusses, welcher zudem einen Datenaustausch ermöglicht, oder in Gestalt einer kabellosen Ladefunktion, beispielsweise durch induktives Laden.

Weiterhin wird die eingangs gestellte Aufgabe durch ein landwirtschaftliches Fahrzeug mit einem Lenksystem nach einem der Ansprüche 1 bis 14 gelöst. Bei dem landwirtschaftlichen Fahrzeug kann es sich insbesondere um eine selbstfahrende Erntemaschine, wie einen Mähdrescher oder Feldhäcksler, oder einen Traktor handeln.

Die vorliegende Erfindung wird nachstehend anhand eines in den Zeichnungen dargestellten Ausführungsbeispieles näher erläutert.

Es zeigen:
- Fig. 1: exemplarisch eine schematische Ansicht eines Lenksystems für ein landwirtschaftliches Fahrzeug; und
- Fig. 2: exemplarisch eine schematische Darstellung eines Lenksignalgebers des landwirtschaftlichesnFahrzeugs.

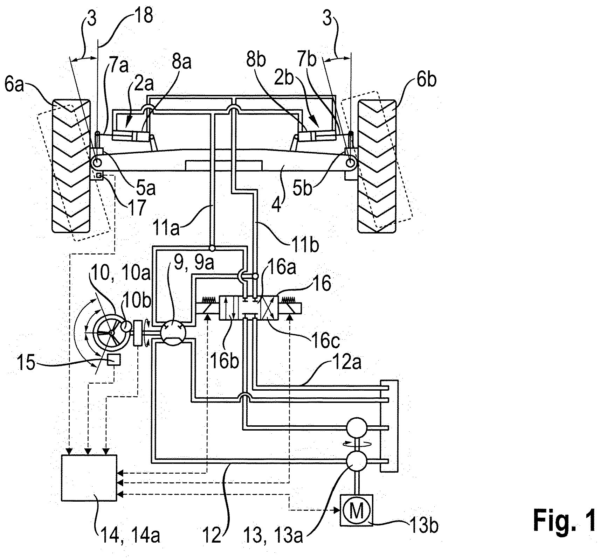

Fig. 1 zeigt exemplarisch ein Lenksystem ist für ein landwirtschaftliches Fahrzeug 1, beispielsweise für einen Mähdrescher, von welchem lediglich eine lenkbare Hinterachse 4 dargestellt ist. Das vorschlagsgemäße Lenksystem weist mindestens einen Lenkzylinder 2a, b zur Änderung eines Radeinschlagwinkels 3 des landwirtschaftlichen Fahrzeugs 1 auf. An der Hinterachse 4 sind Radaufnahmen 5a, b mit jeweils einem Rad 6a, b angeordnet sind. Der Radeinschlagwinkel 3 wird nun durch die Lenkzylinder 2a, b vorgegeben - sodass er durch diese änderbar ist - und zwar dadurch, dass eine jeweilige Kolbenstange 7a, 7b der Lenkzylinder 2a, 2b mit der jeweiligen Radaufnahme 5a, 5b und ein jeweiliges Zylindergehäuse 8a, 8b der Lenkzylinder 2a, 2b mit der Hinterachse 4 verbunden ist. Das Lenksystem weist außerdem ein hydraulisches Hauptlenkventil 9 zur Druckbeaufschlagung des mindestens einen Lenkzylinders 2a, 2b sowie einen Lenksignalgeber 10 - hier ein Lenkrad 10a - zur Betätigung des Hauptlenkventils 9 auf. Das Hauptlenkventil 9 ist dazu eingerichtet, bei einer Betätigung des Lenksignalgebers 10 aus seiner aktuellen Position, hier also bei einem Drehen des Lenkrads 10a, beispielsweise mit einem Lenkknauf 10b, Hydraulikflüssigkeit entweder in die erste Hydraulikleitung 11a oder in die zweite Hydraulikleitung 11b druckbeaufschlagt einzubringen, wobei die Auswahl der jeweiligen Hydraulikleitung 11a, 11b, in welche die Hydraulikflüssigkeit eingebracht wird, von der Betätigungsrichtung des Lenksignalgebers 10 abhängt und das Volumen von dem Grad der Betätigung abhängt. Die Folge ist eine korrespondierende Änderung der Position der Kolbenstangen 7a, 7b der Lenkzylinder 2a, 2b - und damit des Radeinschlagwinkels 3 - sowie ein Rückfluss eines entsprechenden Volumens an Hydraulikflüssigkeit aus der jeweils anderen Hydraulikleitung 11a, 11b durch das Hauptlenkventil 9. Das Hauptlenkventil 9 wird dabei von einem Hauptleitungssystem 12 mit Hydraulikflüssigkeit versorgt, welche von einer Druckversorgungsquelle 13 - hier einer Pumpe 13a, betrieben von einem Pumpenmotor 13b - gefördert wird. Ohne weitere Betätigung des Hauptlenkventils 9 und nach Abschluss der oben beschriebenen Positionsänderung der Kolbenstangen 7a, 7b wird die Hydraulikflüssigkeit von dem Hauptlenkventil 9 in dem Hauptleitungssystem 12 einfach durchgeleitet.

Das vorschlagsgemäße Lenksystem weist eine Steuereinheit 14 zur Anpassung einer Einstellcharakteristik zwischen dem Lenksignalgeber 10 und dem mindestens einen Lenkzylinder 2a, 2b auf. Da diese Einstellcharakteristik auf die gesamte Wirkkette zwischen Lenksignalgeber 10 und Radeinschlagwinkel 3 bezogen ist, wird sie nicht nur von dem Lenksignalgeber 10 und dem mindestens einen Lenkzylinder 2a, 2b, sondern auch wesentlich von dem Hauptlenkventil 9 beeinflusst.

Das vorschlagsgemäße Lenksystem ist dadurch gekennzeichnet, dass die Steuereinheit 14 dazu eingerichtet ist, basierend auf einer sich bei Geradeauslauf einstellenden Nullstellung 18 des Radeinschlagwinkels 3 eine Nachführung einer Nullstellung 20 des Lenksignalgebers 10 durch eine Ansteuerung des Hauptlenkventils 9 vorzunehmen. Das Nachführen der Nullstellung 20 des Lenksignalgebers 10 durch Öffnen des Hauptlenkventils 9 bewirkt, dass dem Wandern der Nullstellung 20 des Lenksignalgebers 10 aufgrund von hydraulischen Undichtigkeiten des Hauptlenkventils 9 aktiv begegnet wird.

Zur Bestimmung des Radeinschlagwinkels 3 ist ein Radwinkelsensor 17 und zur Bestimmung einer Lenkstellung des Lenksignalgebers 10 ist ein Lenkstellungssensor 15 vorgesehen. Dabei kann die Steuereinheit 14 gemäß dem in der Fig. 1 dargestellten Ausführungsbeispiel ein elektronisches Lenkmodul 14a umfassen, welches wiederum einen entsprechenden Datenspeicher aufweist und die von dem Lenkstellungssensor 15 und dem Radwinkelsensor 17 empfangenen Signale verarbeitet.

Gemäß dem in der Fig. 1 dargestellten nicht erfindungsgemäßen Ausführungsbeispiel handelt es sich bei dem Hauptlenkventil 9 um ein hydraulisches Hauptlenkventil 9 mit einer festen Ventilübersetzung. Insbesondere kann es sich bei dem dargestellten Hauptlenkventil 9 um ein Orbitrol 9a handeln. Ein Orbitrol 9a hat den Vorteil, dass selbst bei einem Ausfall der Pumpe 13a eine Betätigung des Orbitrols 9a zu einer Zufuhr an Hydraulikflüssigkeit führt und daher auch in einer solchen Situation ein wirksames Lenken des landwirtschaftlichen Fahrzeugs 1 prinzipiell möglich ist.

Das Lenksystem umfasst ein hydraulisches Zusatzventil 16 zur Druckbeaufschlagung des mindestens einen Lenkzylinders 2a, 2b. Dieses hydraulische Zusatzventil 16 wirkt dabei in prinzipiell gleicher Weise wie das Hauptlenkventil 9 mit der ersten Hydraulikleitung 11a und der zweiten Hydraulikleitung 11b zusammen, sodass das hydraulische Zusatzventil 16 analog die Kolbenstangen 7a, 7b in ihrer Position verändern und damit den Radeinschlagwinkel 3 beeinflussen kann. Bevorzugt ist, dass es sich gemäß der Darstellung in der Fig. 1 bei dem hydraulischen Zusatzventil 16 um ein elektrohydraulisches Zusatzventil handelt. Dieses elektrohydraulische Zusatzventil 16 kann per elektrischer Ansteuerung in eine Sperrstellung 16a, eine erste Schaltstellung 16b oder in eine zweite Schaltstellung 16c gebracht werden. Solange das elektrohydraulische Zusatzventil 16 in der ersten Schaltstellung 16b ist, wird Hydraulikflüssigkeit in die erste Hydraulikleitung 11a eingebracht. Umgekehrt wird, solange das elektrohydraulische Zusatzventil 16 in der ersten Schaltstellung 16b ist, Hydraulikflüssigkeit in die zweite Hydraulikleitung 11b eingebracht. Es erfolgt ein Rückfluss an Hydraulikflüssigkeit über die jeweils andere, erste oder zweite Hydraulikleitung 11a, 11b. In der Sperrstellung 16a ist das elektrohydraulische Zusatzventil 16 gesperrt.

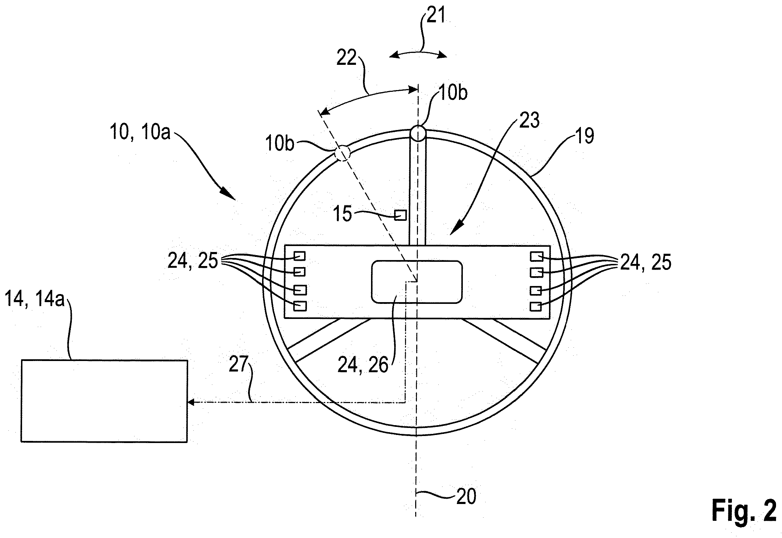

Fig. 2 zeigt exemplarisch eine schematische Darstellung des Lenksignalgebers 10, der als Lenkrad 10 ausgeführt ist. Das Lenkrad 10a umfasst einen Lenkkranz 19, an dem ein Lenkknauf 10b oder eine sonstige Lenkhilfe angeordnet ist. In der Nullstellung 20 des Lenkrades 10a, die mit der Nullstellung 18 des Radeinschlagwinkels 3 korrespondiert, befindet sich der Lenkknauf 10b in einer - lediglich beispielhaft dargestellten - 12-Uhr-Position. Eine durch einen Pfeil 21 angedeutete Lenkbewegung führt dazu, dass der Lenkknauf 10b in eine von der Nullstellung 20 des Lenkrades 10a abweichende Lenkstellung 22 überführt wird. Dies ist durch die strichlinierte Darstellung des Lenkknaufs 10b verdeutlicht.

Wie weiter oben bereits ausgeführt, kommt es aufgrund hydraulischer Undichtigkeiten des Hauptlenkventils 9 zu einem Wandern der Nullstellung 20 des Lenkrades 10a, welchem durch die Ansteuerung des Hauptlenkventils 9, basierend auf der sich bei Geradeauslauf einstellenden Nullstellung 18 des Radeinschlagwinkels 3, durch die Nachführung der Nullstellung 20 des Lenksignalgebers 10 entgegenwirkt wird. Hierfür ist die Steuereinheit 14 dazu eingerichtet, durch Auswertung der Signale von Radwinkelsensor 17 und Lenkstellungssensor 15 eine Nachführgeschwindigkeit zu bestimmen und in Abhängigkeit von der bestimmten Nachführgeschwindigkeit die Nachführung der Nullstellung 20 des Lenksignalgebers 10a durchzuführen. Die Nachführgeschwindigkeit kann durch eine, insbesondere pulsweitenmodulierte, Ansteuerung des Hauptlenkventils 9 soweit reduziert werden, dass der Vorgang des Nachführens bei normalen Lenkvorgängen durch die Bedienperson nicht wahrgenommen wird.

Das kontinuierliche Nachführen der Nullstellung 20 des Lenksignalgebers 10 hat den Vorteil, dass der Lenkradknauf 10b bei Geradeausfahrt immer in der gleichen Position steht, was eine verbesserte Ergonomie für die Bedienperson bedeutet. Ein weiterer Vorteil, der aus der Nachführung resultiert, ist, dass der Lenksignalgeber 10 respektive das Lenkrad 10a wenigstens einen Abschnitt 23 aufweist, welcher mit Elementen 24 zur Ansteuerung von Funktionen des Fahrzeugs 1 ausgeführt ist. Der Abschnitt 23 kann sich dabei im Wesentlichen im Mittenbereich des Lenkrades 10a befinden.

Für die Ansteuerung von Funktionen des Fahrzeugs 1 kann der Abschnitt 23 mit als Bedienelementen 25 ausgeführten Elementen 24 versehen sein. Die Bedienelemente 25 sind vorzugsweise derart positioniert, dass die Bedienperson die Bedienelemente 25 betätigen kann, ohne eine oder beide Hände vom Lenkkranz 19 lösen zu müssen. Weiterhin kann der Abschnitt 23 mit einem als eine Anzeigeeinheit 26 ausgeführten Element 24 versehen sein.

Die Bedienelemente 25 können beispielsweise als Taster, Schalter, Kipptasten, Kippschalter, Schaltwippe oder Drehschalter ausgeführt sein. Ebenfalls denkbar ist eine Ausführung eines oder mehrerer Bedienelemente 25 beispielsweise als Scrollrad oder ähnliches, wodurch das Einstellen bzw. Verstellen von Einstellparametern vereinfacht wird.

Die Anzeigeeinheit 26 kann beispielsweise als eine berührungssensitive Anzeigeeinheit ausgeführt sein, die neben der Anzeigefunktion auch eine Bedien- und Einstellstellfunktionalität aufweist.

Insbesondere können die Bedienelemente 25 und/oder die Anzeigeeinheit 26 der Ansteuerung von Komfortfunktionen des landwirtschaftlichen Fahrzeugs 1 dienen. Komfortfunktionen können beispielsweise die Ansteuerung eines Medienwiedergabegerätes, einer Klima- und/oder Lüftungsvorrichtung oder die Lichtsteuerung des landwirtschaftlichen Fahrzeugs 1 sein. Die Verlagerung der Bedienung von Komfortfunktionen des landwirtschaftlichen Fahrzeugs 1 auf die Bedienelemente 25 und/oder die Anzeigeeinheit 26 am Lenkrad 10a hat den Vorteil, dass dadurch beispielsweise Doppelbelegungen von Betätigungselementen, die üblicherweise an einer Armlehne eines Fahrersitzes in dem Fahrzeug angeordnet sind, entfallen können.

Des Weiteren können die Bedienelemente 25 und/oder die Anzeigeeinheit 26 der Ansteuerung von Betriebsfunktionen des landwirtschaftlichen Fahrzeugs 1 dienen. Mittels der Anzeigeeinheit 26 können auch Anzeige - und/oder Bedienfunktionen einer übergeordneten Steuerungsvorrichtung des landwirtschaftlichen Fahrzeugs 1 zumindest in Teilen wiedergegeben werden. Da der Bildschirm einer solchen Steuerungsvorrichtung in der Regel seitlich des Fahrersitzes in einer Kabine des Fahrzeugs 1 positioniert ist und sich damit - in Abhängigkeit von der Blickrichtung der Bedienperson - am äußeren Rand oder außerhalb des Gesichtsfeldes der Bedienperson befindet, bietet die Anzeigeeinheit 26 am oder im Lenkrad 10a eine ergonomischere Darstellungsmöglichkeit von Betriebsfunktionen. Es können hierdurch auch Funktionsbelegungen von Betätigungselementen an der Armlehne freigegeben werden, die mit bestehenden oder neuen Betriebsfunktionen belegt werden können. Es lässt sich eine Gruppierung der Komfortfunktionen gegenüber der Vielzahl der Betriebsfunktionen erreichen, wodurch eine bessere Übersichtlichkeit geschaffen wird.

Ein weiterer Vorteil, der aus der Nachführung der Nullstellung 20 des Lenksignalgebers 10 respektive des Lenkrades 10a resultiert, ist, dass der Abschnitt 23 an dem Lenkrad 10a mit einer - nicht dargestellten - Lenksäule durch eine Kabelverbindung 27 unmittelbar verbunden sein kann. Die Kabelverbindung 27 verbindet den Lenksignalgeber 10 bzw. das Lenkrad 10a mi der Steuereinheit 14. Die unmittelbar verbundene Kabelverbindung 27 kann festverlegt sein, da erfindungsgemäß ein Wandern oder Driften der Nullstellung 20 des Lenksignalgebers 10 und somit eine Relativbewegung zwischen dem Lenksignalgeber 10 und der Lenksäule vermieden wird und es somit nicht zu einem Reißen der Kabelverbindung 27 durch eine Überdehnung kommen kann.

Gemäß einer bevorzugten Weiterbildung kann an einer im Bereich der Lenknabe befindlichen Fläche des Lenkrades 10a oder am Lenkkranz 19 eine - nicht dargestellte - Halterung anbringbar sein, die der Aufnahme eines mobilen Datenverarbeitungsgerätes dient. Durch das Nachführen der Nullstellung des Lenkrades 10a ist es möglich, zumindest während der Geradeausfahrt ein in der Halterung angeordnetes mobiles Datenverarbeitungsgerät wie ein Mobiltelefon oder Tablet ergonomisch bedienen zu können. Dabei können von dem mobilen Datenverarbeitungsgerät beispielsweise Anwendungen, sogenannte Apps, ausgeführt werden, welche neben einer Kommunikation mit anderen, räumlich entfernten, Personen auch dem Fernzugriff auf Betriebsfunktionen des landwirtschaftlichen Fahrzeugs, anderer Fahrzeuge oder anderer Betriebszweige dienen können.

Besonders vorteilhaft ist es, wenn in die Halterung eine Ladefunktionalität integriert ist, insbesondere in Form zumindest eines USB-Anschlusses, welcher zudem einen Datenaustausch ermöglicht, oder in Gestalt einer kabellosen Ladefunktion, beispielsweise durch induktives Laden.

### Bezugszeichenliste

| | | | |
|---|---|---|---|
| 1 | Landwirtschaftliches Fahrzeug | 16b | Schaltstellung |
| 2a | Lenkzylinder | 16c | Schaltstellung |
| 2b | Lenkzylinder | 17 | Radwinkelsensor |
| 3 | Radeinschlagwinkel | 18 | Nullstellung |
| 4 | Hinterachse | 19 | Lenkkranz |
| 5a | Radaufnahme | 20 | Nullstellung |
| 5b | Radaufnahme | 21 | Lenkbewegung |
| 6a | Rad | 22 | Lenkstellung |
| 6b | Rad | 23 | Abschnitt |
| 7a | Kolbenstange | 24 | Element |
| 7b | Kolbenstange | 25 | Bedienelement |
| 8a | Zylindergehäuse | 26 | Anzeigeeinheit |
| 8b | Zylindergehäuse | 27 | Kabelverbindung |
| 9 | Hauptlenkventil | | |
| 9a | Orbitrol | | |
| 10 | Lenksignalgeber | | |
| 10a | Lenkrad | | |
| 10b | Lenkknauf | | |
| 11a | Hydraulikleitung | | |
| 11b | Hydraulikleitung | | |
| 12 | Hauptleitungssystem | | |
| 12a | Hauptleitungssystem | | |
| 13 | Druckversorgungsquelle | | |
| 13a | Pumpe | | |
| 13b | Pumpenmotor | | |
| 14 | Steuereinheit | | |
| 14a | Lenkmodul | | |
| 15 | Lenkstellungssensor | | |
| 16 | Zusatzventil | | |
| 16a | Sperrstellung | | |

## Patentansprüche

1. Lenksystem für ein landwirtschaftliches Fahrzeug (1) mit mindestens einem Lenkzylinder (2a, 2b) zur Änderung eines Radeinschlagwinkels (3) des landwirtschaftlichen Fahrzeugs (1), mit einem hydraulischen Hauptlenkventil (9) zur Druckbeaufschlagung des mindestens einen Lenkzylinders (2a, 2b), mit einem Lenksignalgeber (10) zur Betätigung des Hauptlenkventils (9) sowie mit einer Steuereinheit (14) zur Anpassung einer Einstellcharakteristik zwischen dem Lenksignalgeber (10) und dem mindestens einen Lenkzylinder (2a, 2b), **dadurch gekennzeichnet, dass** die Steuereinheit (14) dazu eingerichtet ist, basierend auf einer sich bei Geradeauslauf einstellenden Nullstellung (18) des Radeinschlagwinkels (3) eine Nachführung einer Nullstellung (20) des Lenksignalgebers (10) durch eine Ansteuerung des Hauptlenkventils (9) vorzunehmen, wobei zur Bestimmung des Radeinschlagwinkels (3) ein Radwinkelsensor (17) und zur Bestimmung einer Lenkstellung (22) des Lenksignalgebers (10) ein Lenkstellungssensor (15) vorgesehen sind und die Steuereinheit (14) dazu eingerichtet ist, durch Auswertung der Signale von Radwinkelsensor (17) und Lenkstellungssensor (15) eine Nachführgeschwindigkeit zu bestimmen und in Abhängigkeit von der bestimmten Nachführgeschwindigkeit die Nachführung der Nullstellung (20) des Lenksignalgebers (10) durchzuführen.

2. Lenksystem nach einem der Anspruch 1, **dadurch gekennzeichnet, dass** die Steuereinheit (14) dazu eingerichtet ist, die Nachführung der Nullstellung (20) des Lenksignalgebers (10) zumindest bei einer Feldfahrt durchzuführen.

3. Lenksystem nach einem der Anspruch 1 und 2, **dadurch gekennzeichnet, dass** das Hauptlenkventil (9) ein elektrohydraulisches Hauptlenkventil (9) mit einer elektrisch einstellbaren Ventilübersetzung ist.

4. Lenksystem nach einem der Ansprüche 1 bis 3, **dadurch gekennzeichnet, dass** der Lenksignalgeber (10) als ein Lenkrad (10a) ausgebildet ist, welches wenigstens einen Abschnitt (23) aufweist, der mit Elementen (24) zur Ansteuerung von Funktionen des Fahrzeugs (1) ausgeführt ist.

5. Lenksystem nach Anspruch 4, **dadurch gekennzeichnet, dass** der Abschnitt (23) mit als Bedienelementen (25) ausgeführten Elementen (24) versehen ist.

6. Lenksystem nach Anspruch 4 oder 5, **dadurch gekennzeichnet, dass** der Abschnitt (23) mit einem als eine Anzeigeeinheit (26) ausgeführten Element (24) versehen ist.

7. Lenksystem nach einem der Ansprüche 4 bis 6, **dadurch gekennzeichnet, dass** das Lenkrad (10a) einen Lenkknauf (19) aufweist.

8. Lenksystem nach einem der Ansprüche 4 bis 7, **dadurch gekennzeichnet, dass** der Abschnitt (23) an dem Lenkrad (10a) mit einer Lenksäule durch eine Kabelverbindung (27) unmittelbar verbunden sind.

9. Lenksystem nach einem der Ansprüche 6 bis 8, **dadurch gekennzeichnet, dass** die Bedienelemente (24, 25) und/oder die Anzeigeeinheit (24, 26) der Ansteuerung von Komfortfunktionen des landwirtschaftlichen Fahrzeugs (1) dienen.

10. Lenksystem nach einem der Ansprüche 6 bis 9, **dadurch gekennzeichnet, dass** die Bedienelemente (24, 25) und/oder die Anzeigeeinheit (24, 26) der Ansteuerung von Betriebsfunktionen des landwirtschaftlichen Fahrzeugs (1) dienen.

11. Lenksystem nach einem der Ansprüche 6 bis 10, **dadurch gekennzeichnet, dass** an einer im Bereich der Lenknabe befindlichen Fläche des Lenkrades (10a) oder am Lenkkranz (19) eine Halterung anbringbar ist, die der Aufnahme eines mobilen Datenverarbeitungsgerätes dient.

12. Lenksystem nach Anspruch 11, **dadurch gekennzeichnet, dass** in die Halterung eine Ladefunktionalität integriert ist.

13. Landwirtschaftliches Fahrzeug (1) mit einem Lenksystem nach einem der Ansprüche 1 bis 12.

## Claims

1. A steering system for an agricultural vehicle (1), with at least one steering cylinder (2a, 2b) for changing a wheel steering angle (3) of the agricultural vehicle, with a hydraulic main steering valve (9) for applying pressure to the at least one steering cylinder (2a, 2b), with a steering signal generator (10) for actuating the main steering valve (9) as well as with a control unit (14) for adapting an adjustment characteristic between the steering signal generator (10) and the at least one steering cylinder (2a, 2b), **characterized in that** the control unit (14) is configured, based on a null position (18) of the wheel steering angle (3) which is set when running straight, to carry out tracking of a null position (20) of the steering signal generator (10) by controlling the main steering valve (9), wherein a wheel angle sensor (17) is provided in order to determine the wheel steering angle (3) and a steering position sensor (15) is provided in order to determine a steering position (22) of the steering signal generator (10), and the control unit (14) is configured to determine a tracking rate by evaluating the signals from the wheel angle sensor (17) and the steering position sensor (15) and to carry out the tracking of the null position (20) of the steering signal generator (10) as a function of the determined tracking rate.

2. The steering system according to claim 1, **characterized in that** the control unit (14) is configured to carry out the tracking of the null position (20) of the steering signal generator (10) at least during a field run.

3. The steering system according to one of claims 1 and 2, **characterized in that** the main steering valve (9) is an electro-hydraulic main steering valve (9) with an electrically adjustable valve ratio.

4. The steering system according to one of claims 1 to 3, **characterized in that** the steering signal generator (10) is configured as a steering wheel (10a) which has at least one section (23) which is configured with elements (24) for controlling functions of the vehicle (1).

5. The steering system according to claim 4, **characterized in that** the section (23) is provided with elements (24) which are configured as operating elements (25).

6. The steering system according to claim 4 or claim 5, **characterized in that** the section (23) is provided with an element (24) which is configured as a display unit (26).

7. The steering system according to one of claims 4 to 6, **characterized in that** the steering wheel (10a) has a steering knob (19).

8. The steering system according to one of claims 4 to 7, **characterized in that** the section (23) on the steering wheel (10a) is directly connected to a steering column through a connecting cable (27).

9. The steering system according to one of claims 6 to 8, **characterized in that** the operating elements (24, 25) and/or the display unit (24, 26) serve to control amenity functions of the agricultural vehicle (1).

10. The steering system according to one of claims 6 to 9, **characterized in that** the operating elements (24, 25) and/or the display unit (24, 26) serve to control operating functions of the agricultural vehicle (1).

11. The steering system according to one of claims 6 to 10, **characterized in that** a bracket can be attached to a surface of the steering wheel (10a) located in the region of the steering knob or to the steering ring (19), the bracket serving to receive a mobile data processing device.

12. The steering system according to claim 11, **characterized in that** a charging functionality is integrated into the bracket.

13. An agricultural vehicle (1) with a steering system according to one of claims 1 to 12.

## Revendications

1. Système de direction pour un véhicule agricole (1) avec au moins un cylindre directeur (2a, 2b) pour la modification d'un angle de braquage de roue (3) du véhicule agricole (1), avec une soupape de direction principale (9) hydraulique pour l'alimentation en pression d'au moins un cylindre directeur (2a, 2b), avec un émetteur de signal de direction (10) pour l'actionnement de la soupape de direction principale (9) ainsi qu'avec une unité de commande (14) pour l'adaptation d'une caractéristique de réglage entre l'émetteur de signal de direction (10) et l'au moins un cylindre directeur (2a, 2b), **caractérisé en ce que** l'unité de commande (14) est conçue afin d'entreprendre sur la base d'une position zéro (18) se réglant en stabilité directionnelle de l'angle de braquage de roue (3) une poursuite d'une position nulle (20) de l'émetteur de signal de direction (10) par une commande de la soupape de direction principale (9), dans lequel pour la détermination de l'angle de braquage de roue (3), un capteur d'angle de roue (17) est prévu et pour la détermination d'une position de direction (22) de l'émetteur de signal de direction (10), un capteur de position de direction (15) est prévu et l'unité de commande (14) est conçue afin de déterminer par évaluation des signaux du capteur d'angle de roue (17) et du capteur de position de direction (15) une vitesse de poursuite et de réaliser en fonction de la vitesse de poursuite déterminée la poursuite de la position nulle (20) de l'émetteur de signal de direction (10).

2. Système de direction selon la revendication 1, **caractérisé en ce que** l'unité de commande (14) est conçue afin de réaliser la poursuite de la position zéro (20) de l'émetteur de signal de direction (10) au moins pour un déplacement dans le champ.

3. Système de direction selon l'une des revendications 1 et 2, **caractérisé en ce que** la soupape de direction principale (9) est une soupape de direction principale (9) électrohydraulique avec un rapport de soupape réglable électriquement.

4. Système de direction selon l'une des revendications 1 à 3, **caractérisé en ce que** l'émetteur de signal de direction (10) est réalisé comme un volant (10a) qui présente au moins une section (23) qui est réalisée avec des éléments (24) pour la commande de fonctions du véhicule (1).

5. Système de direction selon la revendication 4, **caractérisé en ce que** la section (23) est pourvue d'éléments (24) réalisés comme éléments de commande (25).

6. Système de direction selon la revendication 4 ou 5, **caractérisé en ce que** la section (23) est pourvue d'un élément (24) réalisé comme une unité d'affichage (26).

7. Système de direction selon l'une des revendications 4 à 6, **caractérisé en ce que** le volant (10a) présente un bouton de direction (19).

8. Système de direction selon l'une des revendications 4 à 7, **caractérisé en ce que** la section (23) est reliée directement au niveau du volant (10a) à une colonne de direction par une liaison câblée (27).

9. Système de direction selon l'une des revendications 6 à 8, **caractérisé en ce que** les éléments de commande (24, 25) et/ou l'unité d'affichage (24, 26) servent à la commande de fonctions de confort du véhicule agricole (1).

10. Système de direction selon l'une des revendications 6 à 9, **caractérisé en ce que** les éléments de commande (24, 25) et/ou l'unité d'affichage (24, 26) servent à la commande de fonctions opérationnelles du véhicule agricole (1).

11. Système de direction selon l'une des revendications 6 à 10, **caractérisé en ce qu'**un support peut être monté au niveau d'une surface se trouvant dans la zone du moyeu du volant (10a) ou sur la couronne de direction (19), lequel sert à la réception d'un appareil de traitement de données mobile.

12. Système de direction selon la revendication 11, **caractérisé en ce qu'**une fonctionnalité de charge est intégrée dans le support.

13. Véhicule agricole (1) avec un système de direction selon l'une des revendications 1 à 12.
